## Europäisches Patentamt

## European Patent Office

## Office européen des brevets

(11) Numéro de publication: **0 300 854 B1**

# FASCICULE DE BREVET EUROPEEN

(45) Date de publication du fascicule du brevet: 31.10.90

(51) Int. Cl.⁵: **B62D 1/20**

(21) Numéro de dépôt: 88401601.5

(22) Date de dépôt: 24.06.88

(54) Dispositif d'accouplement d'un mecanisme avec un arbre de direction.

(30) Priorité: 24.07.87 FR 8710530

(43) Date de publication de la demande: 25.01.89 Bulletin 89/4

(45) Mention de la délivrance du brevet: 31.10.90 Bulletin 90/44

(84) Etats contractants désignés: BE DE ES GB IT

(56) Documents cités:
EP-A- 0 266 255
DE-A- 2 919 953
FR-A- 2 444 193
US-A- 743 013
US-A- 2 797 955
US-A- 3 578 782

PATENT ABSTRACTS OF JAPAN,
vol. 10, no. 88 (M-467)[2145], 5 avril 1986, page 27 M 467;
& JP-A-60 226 371 (DAIHATSU KOGYO K.K.) 11-11-1985
PATENT ABSTRACTS OF JAPAN,
vol. 6, no. 50 (M-120)[928], 3 avril 1982, page 5 M 120; &
JP-A-56 163 962 (TOYO KOGYO K.K.) 16-12-1981

(73) Titulaire: REGIE NATIONALE DES USINES RENAULT, Boîte postale 103 8-10 avenue Emile Zola, F-92109 Boulogne-Billancourt(FR)

(72) Inventeur: Krin, René, 73, rue Béranger, F-92700 Colombes(FR)
Inventeur: Chevret, Rémy, 29, rue du Faubourg Saint Denis, F-75010 Paris(FR)
Inventeur: Gros, Jean, 66, rue de Provence, F-78310 Maurepas(FR)
Inventeur: Galles, Henri, 4, Chemin Menuel, F-78126 Aulnay sur Mauldre(FR)

(74) Mandataire: Ernst-Schonberg, Michel et al, REGIE NATIONALE DES USINES RENAULT
(S. 0267) 8 & 10, avenue Emile Zola, F-92109 Boulogne Billancourt Cédex(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif d'accouplement d'un mécanisme qui possède un organe d'entrée orienté verticalement au travers d'un manchon fixe à un élément de véhicule, avec un arbre de direction, tel que défini dans le préambule de la revendication 1 et connu par exemple du document DE-A 2 919 953.

La publication US-A 743 013 décrit un dispositif dans lequel le pignon de commande d'une crémaillère horizontale, se prolonge verticalement par une queue montée à rotation dans un manchon fixé au plancher du véhicule.

Lorsque le véhicule est équipé d'un groupe motopropulseur associé à un élément de chassis tel qu'un berceau amovible qui supporte simultanément les bras de suspension et le carter de direction, l'accouplement du mécanisme de direction avec l'arbre de direction doit tre réalisé par une opération manuelle.

Une telle opération rompt le processus de montage automatique des véhicules et ne peut être réalisee aisément lorsque le compartiment moteur est exigu.

La publication DE-A 2 919 953 décrit un mécanisme de direction assemblé qui s'étend au travers d'un manchon fixé à une paroi de véhicule.

Un tel mécanisme ne peut être assemblé et verrouillé avec l'arbre de direction lorsque le manchon est préalablement fixé à la paroi.

L'invention a pour objet une solution au problème précité et concerne plus particulièrement un dispositif d'accouplement d'un mécanisme à un arbre de direction dont l'extrémité porte un élément de joint de transmission articulé.

Selon l'invention, ce problème est résolu en ce qu'une queue d'assemblage de l'organe d'entrée du mécanisme, coopère par un moyen, a l'auto-verrouillage de l'élément du joint de transmission avec ledit organe d'entrée.

Le dispositif d'accouplement ainsi realisé permet le montage vertical et l'accouplement automatique du mécanisme avec l'arbre de direction. Par ailleurs, en cas d'un mouvement relatif non désiré du mécanisme tel qu'il se produit au cours d'un accident, la disposition precitée évite la destruction de l'accouplement et autorise de ce fait de diriger le véhicule.

D'autres caractéristiques et avantages du dispositif apparaîtront à la lecture de la description qui suit, faite en référence au dessin annexé dans lequel.

- La figure 1 est une représentation schématique vue en coupe axiale d'une partie de la carrosserie d'un véhicule automobile portant le mécanisme et l'arbre de direction.

- La figure 2 est une représentation à une plus grande échelle d'un exemple de réalisation de l'accouplement.

- La figure 3 est une représentation schématique vue en coupe axiale de la carrosserie représentée à la figure 1 au cours de montage du mécanisme.

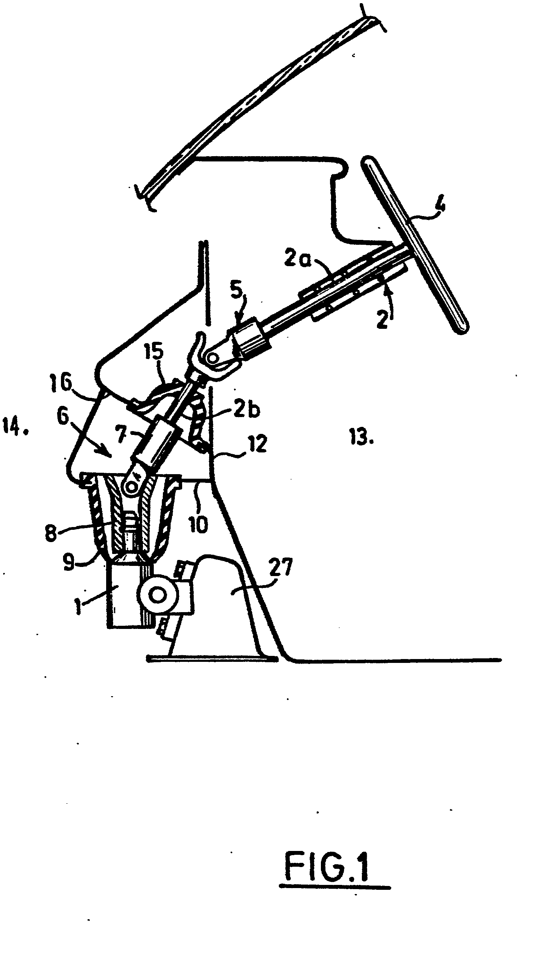

Le mécanisme de direction de voiture représenté à la figure 1 possède notamment un carter étanche 1 dans lequel se déplace de manière en soi connue une crémaillère d'actionnement d'un embiellage non représenté sous l'effet d'un effort de commande comminiqué par un arbre de direction 2 à un pignon d'entrée 3 du mécanisme dont l'axe de rotation est perpendiculaire à ladite crémaillère. L'arbre de direction 2 reçoit l'effort manuel appliqué au volant 4 et est constitué par deux tronçons 2a, 2b accouplés par un premier joint de transmission 5 et dont le tronçon inférieur 2b porte un deuxième joint de transmission 6.

Le joint de transmission 6 est formé ainsi que cela est bien connu par deux chapes 7, 8 réunies par un croisillon. La chape 7 est rendue solidaire de l'extrémité du tronçon 2b de l'arbre de direction 2 et l'autre chape 8 est disposée concentriquement à un manchon 9 semi-rigide. Une extrémité du manchon 9 est accrochée à une paroi 10 de tôle et l'autre extrémité porte une lèvre d'étanchéité circulaire 11 en appui sur un élément du carter 1.

L'arbre de direction 2 traverse ainsi que cela est connu une cloison transversale 12 de séparation de l'habitacle 13 du compartiment moteur 14 et le tronçon 2b de celui-ci est entouré par un soufflet souple 15 également accroché à une paroi 16 de tôle dans le but d'isoler l'habitacle des bruits et odeurs en provenance du compartiment moteur.

Selon une variante de réalisation du soufflet, ce dernier pourra former avec le manchon une seule et même pièce associant les fonctions d'étanchéité et d'isolation phonique précitées.

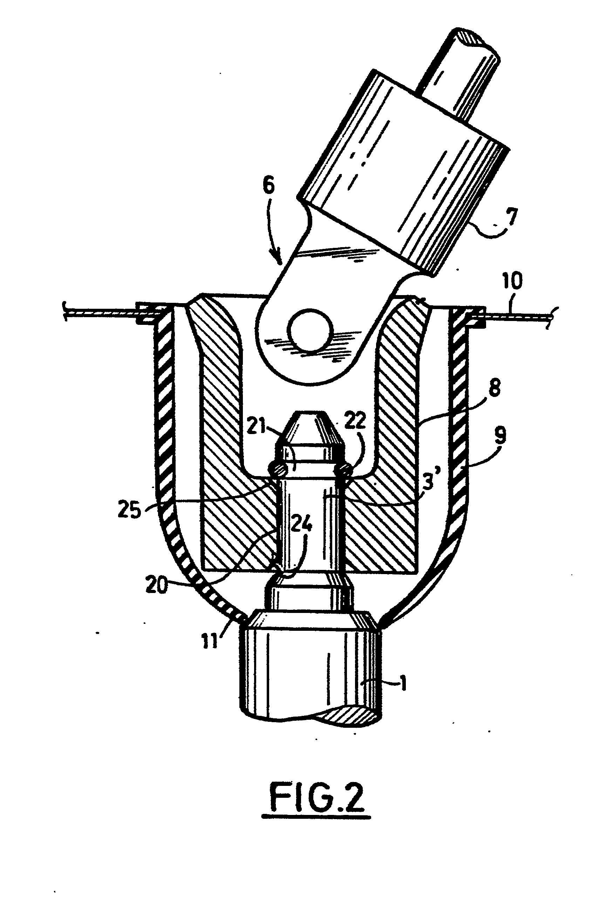

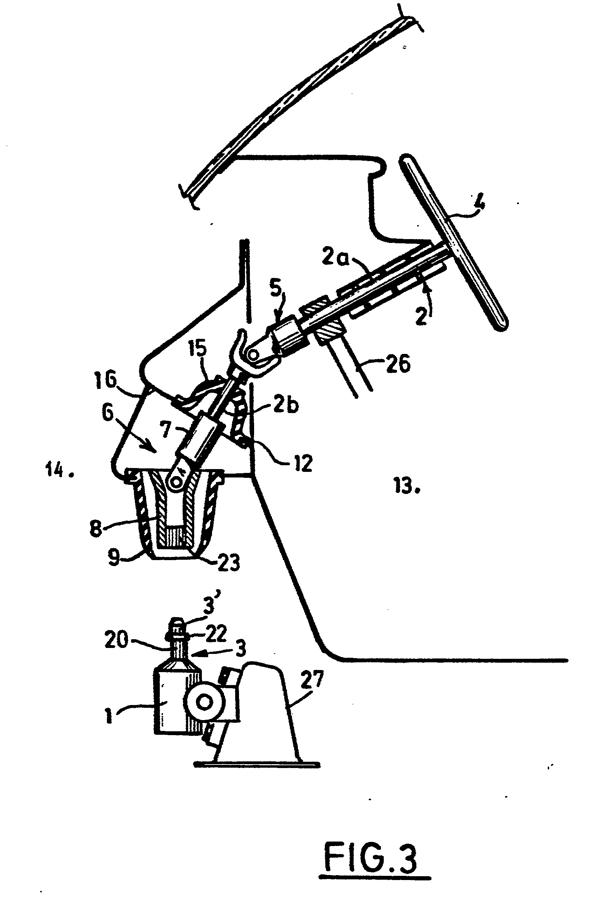

Les figures 2 et 3 décrivent plus particulièrement un mode de réalisation de l'accouplement de la queue 3' du pignon 3 avec la chape 8 du joint de transmission 6.

A titre d'exemple, la queue 3' possède une portée à cannelures 20 hélicoïdales et une gorge 21 de réception d'un anneau 22 élastique constitutif du moyen d'autoverrouillage du dispositif d'accouplement.

La chape 8 possède de manière analogue un moyeu à cannelures droites 23 limitées axialement par des chanfreins 24, 25 dont l'un constitue le moyen de serrage de l'anneau 22 et dont l'autre permet l'expansion de l'anneau 22 à la suite de l'introduction de la queue 3' dans le moyeu. Le contact entre les flancs des cannelures hélicoïdales 20 et des cannelures droites 23, limite les jeux de fonctionnement de la direction au cours de la transmission d'un couple de rotation communiqué par le volant.

Au cours de l'opération d'accouplement du mécanisme avec l'arbre de direction, la translation de ce dernier est empêchée par un outil 26 représenté à la figure 3.

On présente sous le véhicule le berceau 27 qui supporte notamment le carter 1 et les bras de suspension. On élève le berceau verticalement tandis que la chape 8 est immobilisée en translation dans le manchon 9 sous l'effet de l'outil 26. La queue 3' du pignon qui possède une extrémité conique est engagée dans le moyeu de la chape 8 et l'anneau 22 se retracte au contact du chanfrein 24 avant de retrouver son diamètre initial au contact du chanfrein 25.

Dans le même temps la lèvre 11 d'étanchéité du manchon 9 vient en appui sur le carter 1.

On enlève enfin l'outil 26 après avoir réalisé l'accouplement sans intervention manuelle.

Il y a lieu de noter que le moyen d'accouplement par anneau élastique de la queue 3' du pignon avec la chape 8 du joint de transmission n'est proposé qu'à titre d'exemple afin d'illustrer la mise en oeuvre de l'invention qui peut par voie de conséquence s'appliquer à d'autres modes de réalisation de cet accouplement.

## Revendications

1. Dispositif d'accouplement d'un mécanisme qui possède un organe (3) d'entrée orienté verticalement au travers d'un manchon (9) fixé a un élément de véhicule, avec un arbre de direction (2) dont l'extrémité porte un élément (7) de joint de transmission (6) articule, et dans lequel un élément (8) de joint est disposé concentriquement au manchon (9), caractérisé par le fait qu'une queue d'assemblage (3') de l'organe (3) d'entrée du mécanisme, coopère par un moyen (22), à l'auto-verrouillage de l'élément (8) du joint de transmission avec ledit organe d'entree (3).

2. Dispositif selon la revendication 1, caractérisé par l'extremité du manchon (9) porte une lèvre d'étanchéité circulaire (11) en appui sur un élément de carter (1) du mécanisme.

3. Procédé de montage du dispositif selon l'une quelconque des revendications 1 ou 2, caractérisé par le fait que l'élément (8) de joint de transmission est immobilisé en translation par rapport au manchon (9) par un moyen (26) à action temporaire au cours du processus d'accostage et d'assemblage de la queue de l'organe d'entrée du mécanisme avec ledit élément de joint.

## Patentansprüche

1. Verbindungsvorrichtung für ein Lenkgetriebe, mit einem Eingriffsteil (3), das senkrecht ausgerichtet ist und eine Muffe (9) durchsetzt, die an einem Kraftfahrzeugteil befestigt ist, mit einer Lenkspindel (2), deren Ende ein angelenktes Teil (7) einer Kraftübertragung (6) trägt und wobei ein Teil (8) der Übertragung konzentrisch zur Muffe (9) angeordnet ist, dadurch gekennzeichnet, daß ein Verbindungsstutzen (3') des Eingriffsteils (3) des Lenkgetriebes mittels einer Anordnung (22) eine Selbstverriegelung des Teils (8) der Kraftübertragung mit dem Eingriffsteil (3) bewirkt.

2. Vorrichtung nach Anspruch 1, dadurch gekennzeichnet, daß das Ende der Muffe (9) eine kreisförmige Dichtlippe (11) trägt, die sich auf einem Teil des Gehäuses (1) des Lenkgetriebes abstützt.

3. Verfahren zum Einbau der Vorrichtung nach einem der Ansprüche 1 oder 2, dadurch gekennzeichnet, daß das Teil (8) der Kraftübertragung in Verschieberichtung relativ zur Muffe (9) festgehalten wird durch eine zeitweise wirksame Anordnung (26) während des Einpassens und des Zusammenbaus des Stutzens des Eingriffsteils des Lenkgetriebes mit den Verbindungsteilen.

## Claims

1. An arrangement for coupling a mechanism which has an input member (3) which is oriented vertically through a casing (9) fixed to a vehicle component, to a steering column (2), the end of which carries a pivotal transmission joint (6) element (7), and in which a joint element (8) is disposed concentrically with respect to the casing (9), characterised in that an assembly shank (3') of the input member (3) of the mechanism co-operates by a means (22) with selflocking of the element (8) of the transmission joint with said input member (3).

2. An arrangement according to claim 1 characterised in that the end of the casing (9) carries a circular sealing lip (11) which bears against a housing element (1) of the mechanism.

3. A process for assembly of the arrangement according to either one of claims 1 and 2 characterised in that the transmission joint element (8) is immobilised in respect of translatory movement with respect to the casing (9) by a means (26) which involves a temporary action in the course of the procedure for approaching and assembling the shank of the input member of the mechanism to said joint element.

## FIG.1

## FIG.2

## FIG.3